# EUROPÄISCHE PATENTSCHRIFT

(11) **EP 2 641 518 B1**
(45) Veröffentlichungstag und Bekanntmachung des Hinweises auf die Patenterteilung: **22.04.2015**
(21) Anmeldenummer: 13150841.8
(22) Anmeldetag: 10.01.2013
(51) Int. Cl.: A47J 37/10

(54) **Bratspritzschutz**
Splash guard
Protection contre les projections de friture

(30) Priorität: 19.03.2012 CH 3832012
(43) Veröffentlichungstag der Anmeldung: 25.09.2013
(73) Patentinhaber: MOHA Moderne Haushaltwaren AG, 1214 Vernier (CH)
(72) Erfinder: Greiner, Ulrich, 89231 Neu-Ulm (DE)
(74) Vertreter: Schneider Feldmann AG Patent- und Markenanwälte

(56) Entgegenhaltungen:
- CN-U- 201 585 876
- DE-A1- 10 013 403
- US-A- 2 428 894

## Beschreibung

### Technisches Gebiet

Die vorliegende Erfindung beschreibt einen Bratspritzschutz, umfassend ein Auflageelement zur lösbaren Auflage auf einer Pfannenöffnung, wobei das Auflageelement mindestens eine Auflageelementöffnung aufweist, durch welche Flüssigkeiten und Dämpfe vollständig querend durchtreten können, wobei ein Dampfdurchlasselement das Auflageelement und die mindestens eine Auflageelementöffnung mindestens teilweise überdeckend auf einer ersten Seite des Auflageelements bewegbar derart angeordnet ist, dass ein Dampfaustrittsraum zwischen Auflageelement und Dampfdurchlasselement mit einer variierbaren Höhe ausbildbar ist.

### Stand der Technik

Aus dem Stand der Technik sind verschiedene Vorrichtungen, Bratspritzschutz genannt, bekannt, welche direkt auf eine Pfannenöffnung einer Bratpfanne oder eines Topfes auflegbar sind. Das während des Bratens aus dem Bratgut austretende Fett oder Öl wird durch den Bratspritzschutz an einem unkontrollierten Wegspritzen gehindert, sodass das die Kochfelder und damit der Herd nicht bzw. nur geringfügig verunreinigt werden.

Als Bratspritzschutz ist ein Auflageelement aus einem feinmaschigen Sieb oder einem geschlossenen Flächengebildet aus Papier oder Zellstoff bekannt, welches die Pfannenöffnung vollständig abdecken kann. Der Abdeckungsgrad ist bei derartigen Auflageelementen fest vorgegeben und kann nicht variiert werden. Sofern Auflageelementöffnungen angeordnet sind, sind deren Grössen konstant. Wenn die gesamte Pfannenöffnung abgedeckt ist, kann aber Luft und Dampf zwischen Bratgut und dem Auflageelement nur eingeschränkt bis gar nicht mehr aus der Pfanne entweichen, wodurch ein Dünsten statt Braten resultiert. Da kein effektiver Luft- bzw. Dampfaustausch zwischen dem abgedeckten Raum in der Bratpfanne und der Umgebung ausserhalb der Bratpfanne möglich ist, erreicht der Anwender nur schlechte Bratergebnisse.

Um das Braten des Bratguts zu optimieren ist ein Bratspritzschutz mit segmentiert ausgebildetem Auflageelement geschaffen worden. Ein derartiger Bratspritzschutz ist aus der CN201585876 bekannt. Dieser Bratspritzschutz ist mehrteilig ausgebildet, wobei das Auflageelement aus beispielsweise vier Auflagesegmenten besteht, die um eine Achse schwenkbar gelagert sind. Wenn alle vier Auflagesegmente des Auflageelements aufgeschwenkt sind, wird die gesamte Pfannenöffnung bedeckt, womit ein maximaler Abdeckungsgrad erreicht wird. Luft und Dampf können vom Bratgut durch eine Mehrzahl von Auflageelementöffnungen das Auflageelement querend aus der Pfanne entweichen. Die Auflageelementöffnungen sind darum mit geringem Durchmesser ausgeführt, sodass nicht neben dem gewünschten Dampf versehentlich Fett aus der Pfanne herausspritzt. Bei starker Dampfentwicklung kommt es vor, dass sich der Dampf über dem Bratgut in der Pfanne staut. In diesem Fall können die Auflagesegmente relativ zueinander verschwenkt werden, wodurch ein Teil der Pfannenöffnung zusätzlich freigebbar ist, um ein Dünsten des Bratguts zu verhindern.

Der freizugebende Bereich muss dabei vom Bratgut lateral beabstandet angeordnet sein, sodass das Herausspritzen von Fett lokal am Ort des Bratguts verhindert wird und Dampf an den Positionen wo die Auflagesegmente aufgeschwenkt sind entweichen kann. Es ist also möglich entweder die gesamte Pfannenöffnung vollständig abzudecken bis eine segmentierte Abdeckung durch unterschiedlich starkes Aufschwenken einzustellen.

Dieses gezielte Aufschwenken ist für den Anwender wenig handhabungsfreundlich und kann dazu führen, dass Fett doch ungewünscht entweicht, wenn die Auflagesegmente des Auflageelements zu weit aufgeschwenkt sind, um ausreichend Dampf austreten zu lassen. Je nach Grösse des Bratguts kann es schwierig bis unmöglich sein, die Auflagesegmente derartig zu verschwenken, dass nur der Dampf aus der Pfanne entweicht.

In der US2428894 ist ein Bratspritzschutz zur Auflage auf eine Bratpfannenöffnung offenbart, umfassend ein Auflageelement zur lösbaren Auflage auf einer Pfannenöffnung, wobei das Auflageelement mindestens eine Auflageelementöffnung aufweist, durch welche Flüssigkeiten und Dämpfe vollständig querend durchtreten können. Ein bewegbares Dampfdurchlasselement ist auf einer Seite des Auflageelementes bewegbar angeordnet, wobei ein Dampfaustrittsraum zwischen Auflageelement und Dampfdurchlasselement mit einer variablen Höhe ausbildbar ist. Da das Dampfdurchlasselement die Auflageelementöffnung mindestens teilweise überdecken kann, kann eine Dampfdurchlassstellung und eine Geschlossenstellung des Dampfdurchlasselementes relativ zum Auflageelement geschaffen werden.

In der US2428894 ist ausschliesslich eine definierte lineare Bewegung des Dampfdurchlasselementes vertikal relativ zum Auflageelement möglich, wobei das Dampfdurchlasselement in Richtung Auflageelement gedrückt bzw. gezogen wird und ein Dampfaustrittsraum ausbildbar ist. Das Bratgut kann bei aufgesetztem Bratspritzschutz nicht unabgedeckt in der Pfanne gebraten werden, wenn dies durchgeführt werden soll, muss der Bratspritzschutz komplett von der Pfannenöffnung entfernt werden. Der Benutzer muss den Bratspritzschutz dann von der Pfannenöffnung entfernen und zur Lagerung ablegen.

### Darstellung der Erfindung

Die vorliegende Erfindung hat sich zur Aufgabe gestellt einen Bratspritzschutz zu schaffen, der gesichert ein Entweichen ungewünschten Fettes aus einer Pfanne verhindert, wobei ein entweichen von Dampf einfach mit variierbarer Menge erlaubt werden kann.

Diese Aufgabe löst ein mehrteiliger Bratspritzschutz, welcher neben einem Auflageelement ein Dampfdurchlasselement umfasst. Das Dampfdurchlasselement kann vom Auflageelement unterschiedlich beabstandet werden, wodurch ein Dampfaustrittsraum zwischen einer ersten Seite des Auflageelementes und des Dampfdurchlasselementes gezielt ausbildbar ist. Diese Ausbildung des Dampfdurchlasselementes kann durch eine rein lineare Bewegung der Teile relativ zueinander oder durch eine kombinierte Schwenkbewegung mit linearer Verschiebung des Dampfdurchlasselementes relativ zum Auflageelement erfolgen.

Der Bratspritzschutz kann in eine vollständig geschlossene Stellung gebracht werden, in welcher weder Fett noch Dampf durch die Pfannenöffnung austreten kann. Durch lineare Beabstandung des Dampfdurchlasselementes vom Auflageelement kann der Bratspritzschutz in eine Dampfaustrittsstellung gebracht werden, in welcher lediglich Dampf durch den Bratspritzschutz nach aussen gelangen, wobei das Fett am Austritt vollständig gehindert ist.

Durch Ausgestaltung des Dampfdurchlasselementes mit mindestens einer Dampfdurchlasselementöffnung kann das Entweichen des Dampfes durch den Dampfaustrittsraum noch unterstützt werden.

### Kurze Beschreibung der Zeichnungen

Der Erfindungsgegenstand wird nachstehend im Zusammenhang mit den anliegenden Zeichnungen beschrieben.
- Figur 1a: zeigt eine Schnittansicht eines Bratspritzschutz in einer geschlossenen Stellung, welcher auf einer angedeuteten Pfanne aufliegt und durch eine lineare Verschiebung eines Dampfdurchlasselementes betätigbar ist, während
- Figur 1b: eine Schnittansicht des Bratspritzschutzes in einer offenen Stellung zeigt, in welcher Dampf austreten kann.
- Figur 2a: zeigt einen schematischen Schnitt durch einen Bratspritzschutz in einer geschlossenen Stellung, welcher auf einer angedeuteten Pfanne aufliegt, während
- Figur 2b: einen Querschnitt durch einen Bratspritzschutz in einer offenen Stellung und
- Figur 2c: einen Querschnitt durch einen Bratspritzschutz in einer Dampfaustrittsstellung zeigt.
- Figuren 3: zeigen Aufsichten des Bratspritzschutzes in a) geschlossener Stellung, b) offener Stellung und c) Dampfaustrittsstellung gemäss Figuren 2a) bis c).
- Figuren 4: zeigen jeweils Aufsichten auf Dampfdurchlasselemente mit ein bis fünf Dampfdurchlasselementöffnungen.
- Figur 5a: zeigt eine Aufsicht auf ein Dampfdurchlasselement und ein darunter liegend angedeutetes Auflageelement mit jeweils kreisförmigem Querschnitt und kreisförmigen Auflageelementöffnungen, während
- Figur 5b: eine Aufsicht auf ein Dampfdurchlasselement und ein darunter liegend angedeutetes Auflageelement mit jeweils rechteckigem Querschnitt zeigt.
- Figuren 6: zeigen Ansichten unterschiedlich geformter Dampfdurchlasselemente mit unterschiedlicher Griffgestaltung.

### Beschreibung

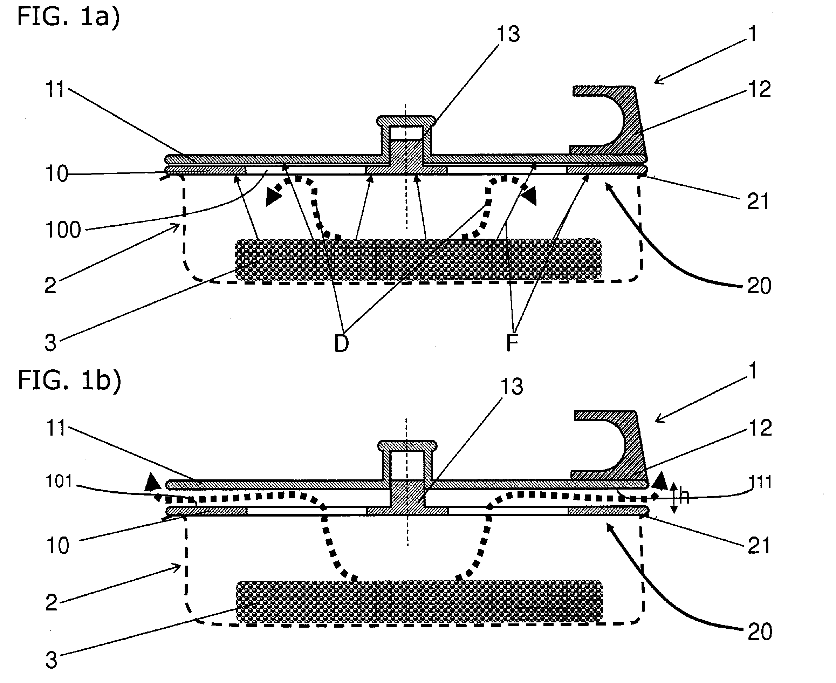

Ein erster Bratspritzschutz 1 ist in den Figuren 1a und 1b gezeigt und weist ein Auflageelement 10 auf, mit welchem der Bratspritzschutz 1 auf einem Pfannenrand 21 einer Pfanne 2 auflegbar ist. Das Auflageelement 10 überdeckt mindestens teilweise eine Pfannenöffnung 20. Mindestens eine Auflageelementöffnung 100 ist aus dem Auflageelement 10 ausgespart. Auf einer ersten Seite 101 des Auflageelements 100 ist ein Dampfdurchlasselement 11 lösbar befestigt und bewegbar auf einem Lager 13 gelagert. Das Dampfdurchlasselement 11 liegt mit einer ersten Seite 111 auf dem Auflageelement 100 auf, wodurch der Bratspritzschutz 1 die Pfannenöffnung 20 vollständig abschliesst.

Wird nun Bratgut 3 in der Pfanne 2 gebraten, spritzen Fettspritzer F in Richtung des Bratspritzschutzes 1, wo diese vom Auflageelement 10 oder vom Dampfdurchlasselement 11 aufgehalten werden. Auch aus dem Bratgut 3 austretender Dampf D wird vom Bratspritzschutz 1 in der geschlossenen Stellung in der Pfanne 2 gehalten.

Mittels eines Griffes 12 ist das Dampfdurchlasselement 11 einfach in Pfeilrichtung verschiebbar und damit anhebbar. Durch diese Beabstandung des Dampfdurchlasselementes 11 vom Auflageelement 10 wird der Bratspritzschutz 1 in eine Dampfaustrittsstellung gebracht. Zwischen der ersten Seite 101 des Auflageelementes 10 und der ersten Seite 111 des Dampfdurchlasselementes 11 kann ein linearer Abstand reproduzierbar und einfach eingestellt werden, wobei ein Dampfaustrittsraum zwischen dem Auflageelement 10 und dem Dampfdurchlasselement 11 mit einer Höhe h gezielt ausbildbar ist. Dampf D kann damit die mindestens eine Auflageelementöffnung 100 vollständig querend zwischen Auflageelement 10 und Dampfdurchlasselement 11 und damit in den Dampfaustrittsraum gelangen. Während Fettspritzer F von der ersten Seite 111 des Dampfdurchlasselementes 11 zurückgehalten werden, kann der Dampf D durch den Dampfaustrittsraum strömen und dadurch schlussendlich aus der Pfanne 2 entweichen. Je nach Grösse des gewählten Abstandes wird die Höhe h des Dampfaustrittsraumes variiert, womit die durchströmende Dampfmenge einstellbar ist. Während nur der Dampf D aus der Pfanne 2 durch den Bratspritzschutz 1 entweichen kann, wird das Fett vollständig am Austritt gehindert. Dazu wird eine rein lineare Bewegung des Dampfdurchlasselementes 11 relativ zum Auflageelement 10 durchgeführt.

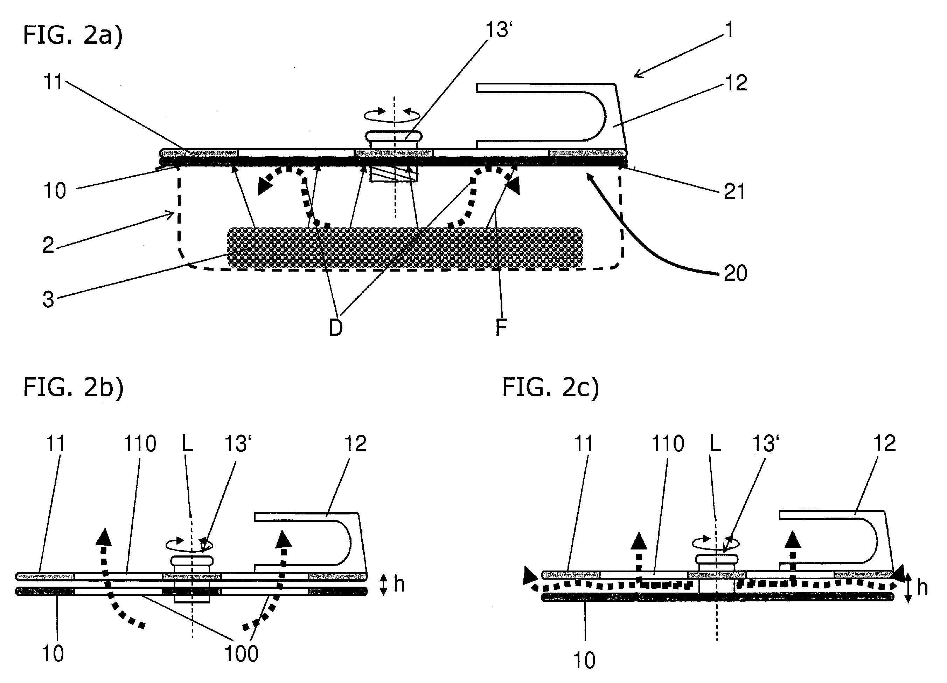

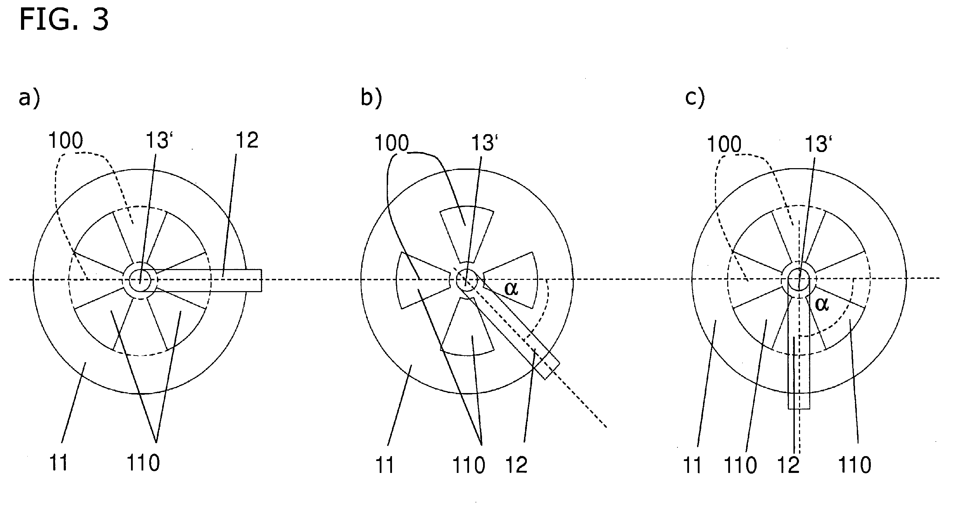

Es ist möglich, die lineare Beabstandung des Dampfdurchlasselementes 11 relativ zum Auflageelement 10 durch eine Rotations- oder Schwenkbewegung des Dampfdurchlasselementes 11 zu erreichen, was in den Figuren 2 und 3 gezeigt ist. Figur 2a zeigt einen Bratspritzschutz 1 aufliegend auf einer Pfanne 2, wobei das Auflageelement 10 relativ zum Dampfdurchlasselement 11 bewegbar ist und beide Elemente mit dem Lager 13', welches als Drehlager 13' ausgebildet ist, wirkverbunden sind. Auch hier weist das Auflageelement 10 mindestens eine Auflageelementöffnung 100 auf, welche aufgrund der Schnittrichtung nicht in Figur 2a erkennbar ist. In der geschlossenen Stellung des Bratspritzschutzes 1 kann weder Dampf D noch Fett F aus der Pfanne 2 entweichen, was dem Zustand gemäss Figur 1a entspricht.

Durch Rotation oder Verschwenken des Dampfdurchlasselementes 11 um eine Drehachse L mittels Griff 12 ist eine Beabstandung des Druchlasselementes 11 vom Auflageelement 10 möglich. Um diese Beabstandung mit einstellbarem Abstand bzw. Höhe h zu erreichen, ist eine Steigung am Drehlager 13' angeordnet. Wenn das Auflageelement 10 fest am Drehlager 13' befestigt ist, wird beim Verschwenken des Dampfdurchlasselements 11 das Auflageelement 10 wie in Figur 2c erkennbar bis zu einer maximalen Höhe h vom Dampfdurchlasselement 11 entfernt. Dabei sind die erste Seite 101 des Auflageelements 10 und die erste Seite 111 des Dampfdurchlasselementes 11 um die Höhe h voneinander beabstandet.

Die Schwenkbewegung ist mit einer linearer Verschiebung des Dampfdurchlasselementes relativ zum Auflageelement kombiniert. Somit ist eine Dampfaustrittsstellung des Bratspritzschutzes 1 gemäss Figur 2c erreichbar, in welcher nur Dampf D den Dampfaustrittsraum passiert und entweicht, somit können gute Bratergebnisse erzielt werden und ein Dünsten verhindert werden.

In der hier gezeigten Ausgestaltung des Dampfdurchlasselementes 11 kann optional mindestens eine Dampfdurchlasselementöffnung 110 ausgespart sein, welche das Dampfdurchlasselement 11 vollständig quert.

Wie in Figur 2b dargestellt kann eine offene Stellung des Bratspritzschutzes 1 eingestellt werden, sofern Auflageelement 10 relativ zum Dampfdurchlasselement 11 rotierbar ist und sich die mindestens eine Auflageelementöffnung 100 und die mindestens eine Dampfdurchlasselementöffnung 110 benachbart gegenüberliegen. Wenn die Öffnungen 100, 110 miteinander fluchten ist eine offene Stellung erreicht. Dann kann Dampf D, sowie in gewisser Menge auch Fettspritzer F durch den Bratspritzschutz 1 entweichen, was mit Pfeilen angedeutet ist. Diese vollständige Öffnung sollte nur kurzfristig eingestellt werden, ist aber sinnvoll, wenn Dampf D schnellstens abgeführt werden muss.

Wird eine kombinierte relative Schwenkbewegung um die Drehachse L und eine Linearbewegung in Richtung der Drehachse L durchgeführt kann die Höhe h des Dampfdurchlassraumes zwischen den Bauteilen aufgrund der Steigung des Drehlagers 13' einfach eingestellt werden. Es können optional noch Rastmittel eingesetzt werden, womit bestimmte Vorzugspositionen des Auflageelements 10 oder des Dampfdurchlasselementes 11 gehalten werden.

In den Figuren 3a bis 3c sind Aufsichten auf den Bratspritzschutz 1 gemäss den Figuren 2a bis 2c jeweils in einer Aufsicht gezeigt. Das Auflageelement 10 weist hier vier Auflageelementöffnungen 100 auf, während das Dampfdurchlasselement 11 ebenfalls vier Dampfdurchlasselementöffnungen 110 aufweist. In der geschlossenen Stellung gemäss Figur 3a sind Auflageelementöffnungen 100 von Flächen des Dampfdurchlasselements 11 verdeckt, sodass weder Dampf noch Fettspritzer entweichen können.

Wird nun der Griff 12 und damit das Dampfauslasselement 11 um einen Winkel α von 45° verschwenkt, wird das Dampfauslasselement 11 vom Auflageelement 10 linear in Richtung der Drehachse L abgehoben. Da auch Dampfdurchlasselement 11 Dampfdurchlasselementöffnungen 110 aufweist, wird die vollständig offene Stellung gemäss Figur 3b erreicht. Alle Öffnungen 100, 110 fluchten und sind geöffnet, sodass Dampf sowie Fettspritzer nach aussen treten können.

Bei einer weiteren Verschwenkung um weitere 45° wird die Dampfaustrittstellung des Bratspritzschutzes 1 erreicht, wobei Auflageelement 10 und Dampfdurchlasselement 11 um die Höhe h voneinander beabstandet sind. Da die verschiedenen Öffnungen 100, 110 nicht mehr fluchten oder teilweise überlappend angeordnet sind, kann ausschliesslich Dampf durch den gebildeten Dampfaustrittsraum strömen und durch die Dampfdurchlasselementöffnungen 110 oder im Bereich der Begrenzung der Elemente 10, 11 austreten.

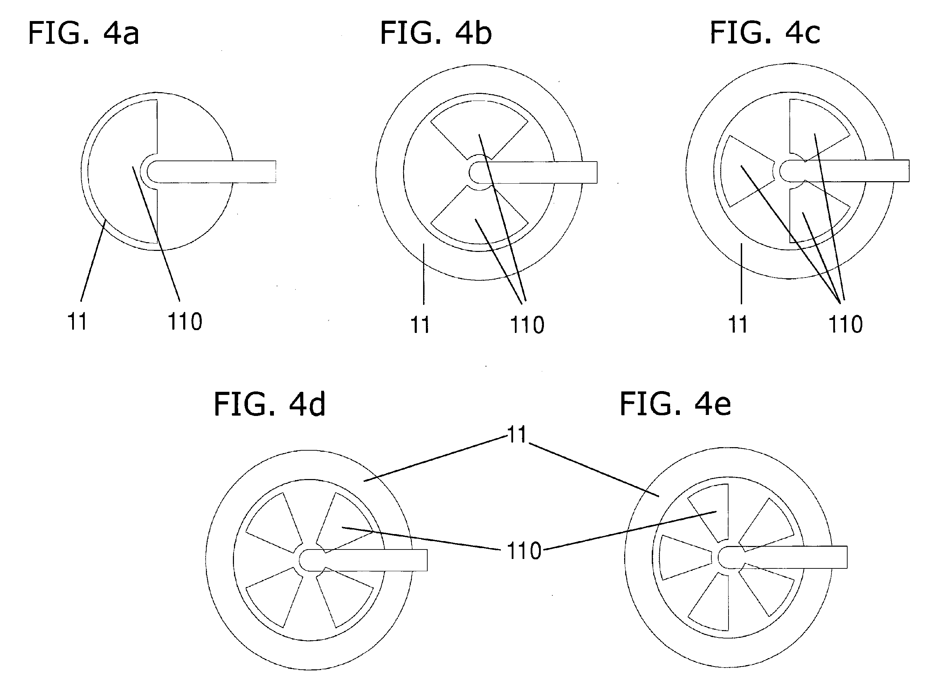

Damit eine geschlossene Stellung erreichbar ist, muss die Anzahl der Öffnungen 100, 110 aufeinander abgestimmt werden. In den Figuren 4a bis 4e sind jeweils Auflageelemente 10 und Dampfdurchlasselemente 11 mit gleich vielen Öffnungen 100, 110 beispielhaft gezeigt. Dabei wurden eins bis fünf Öffnungen 100, 110 gewählt. Der Drehwinkel α welcher zur Erreichung der offenen Stellung überstrichen werden muss, variiert hier entsprechend α = 360°/Anzahl der Öffnungen. Je nach Ausgestaltung des Drehlagers 13' betreffend die Länge und die gewählte Steigung kann eine bestimmte Verschwenkbarkeit gewählt werden.

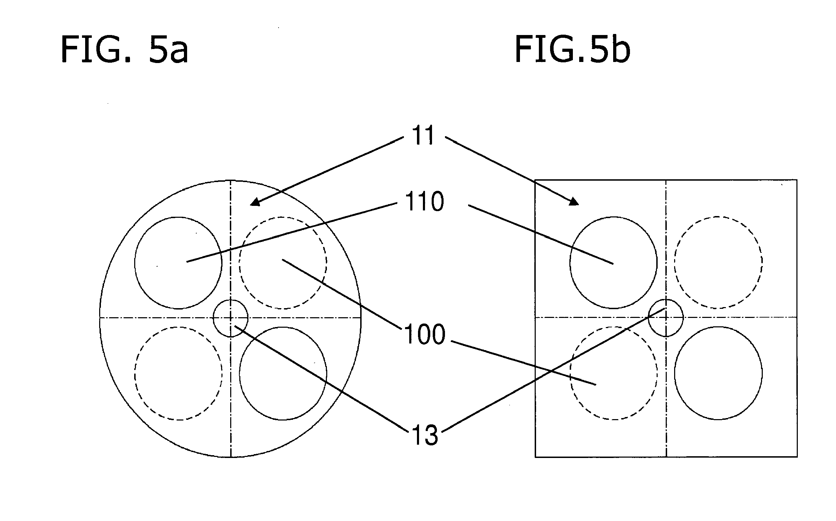

Der Umfang des Auflageelementes 10 kann, wie in Figur 5a und 5b gezeigt, verschieden gewählt sein. Neben einem kreisförmigen Umfang kann auch ein rechteckiger oder quadratischer Umfang der Elemente gewählt werden. Wichtig ist, dass die Grösse des Auflageelementes 10 auf die Pfannenöffnung 20 üblicher Pfannen 2 angepasst ist.

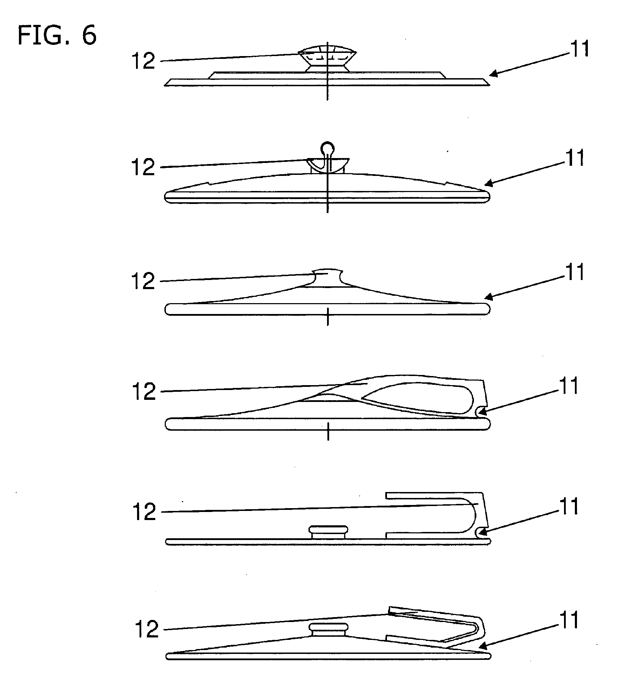

Die Gestaltung des Griffes 12 der am Dampfdurchlasselement 11 befestigt oder angeformt ist, kann verschieden sein, wie in Figuren 6 angedeutet. Wahlweise kann der Griff 12 im Zentrum des Dampfdurchlasselements 11 angeordnet sein, oder aber im Randbereich. Es spielt dabei keine Rollen, ob eine ausschliesslich lineare Beabstandung oder eine Verschwenkung mit kombinierter linearer Beabstandung mit diesem Griff 12 durchgeführt wird. Es ist ebenfalls möglich einen Griff 12 am Auflageelement 10 vorzusehen, womit die Bedienung erleichtert werden kann.

Die Durchmesser und/oder die Flächen des Dampfdurchlasselementes 11 und des Auflageelementes 10 können gleich gross gewählt werden. In der Regel werden Auflageelement 10 und/oder Dampfdurchlasselement 11 scheiben- oder plattenförmig ausgestaltet. Es ist aber auch möglich die Elemente 10, 11 bzw. nur das Dampfdurchlasselement 11 bzw. die ersten Seite 111 konisch und damit haubenförmig zu gestalten, damit kondensierte Flüssigkeit an der ersten Seite 111 des Dampfdurchlasselementes 11 in den Randbereich abgeführt wird. Damit ist das Hineintropfen von Flüssigkeit in die Pfanne 2 verhindert. Um den Bratspritzschutz 1 platzsparend verstauen zu können sollte die Bauhöhe möglichst gering sein.

Die Querschnittsflächen der Auflageelementöffnungen 100 und der Dampfdurchlasselementöffnungen 110 können identisch oder verschieden ausgeführt sein. Neben den hier gezeigten Kreis- oder Ringsegmenten und Kreisförmigen Querschnitten, können die Öffnungen 100, 110 auch anders geformt sein.

Das Lager 13, 13' kann entweder am Auflageelement 10 oder Dampfdurchlasselement 11 vorgesehen sein und an diesem angeformt oder unlösbar befestigt sein. Das jeweils am Lager 13, 13' nicht befestigte oder angeformte Bauteil kann entsprechend relativ zum anderen Bauteil verschoben und verschwenkt werden. Es ist sinnvoll eine lösbare Verbindung zwischen Auflageelement 10 und Dampfdurchlasselement 11 auszugestalten, damit nach der Trennung der Elemente eine einfache Reinigung durchgeführt werden kann.

Bevorzugt sind Auflageelement 10 und Dampfdurchlasselement 11 aus Kunststoffen hergestellt.

### Bezugszeichenliste

- 1: Bratspritzschutz
10 Auflageelement
100 Auflagelementöffnung
101 erste Seite des Auflageelements
11 Dampfdurchlasselement
110 Dampfdurchlasselementöffnung
111 erste Seite des Dampfdurchlasselements
12 Griff
13, 13' Lager/Drehlager
L Drehachse
h Höhe des Dampfaustrittsraumes
- 2: Pfanne
20 Pfannenöffnung
21 Pfannenrand
- 3: Bratgut
- D: Dampf
- F: Fett

## Patentansprüche

1. Bratspritzschutz (1),
umfassend ein Auflageelement (10) zur lösbaren Auflage auf einer Pfannenöffnung (20), wobei das Auflageelement (10) mindestens eine Auflageelementöffnung (100) aufweist, durch welche Flüssigkeiten und Dämpfe vollständig querend durchtreten können, wobei
ein Dampfdurchlasselement (11) das Auflageelement (10) und die mindestens eine Auflageelementöffnung (100) mindestens teilweise überdeckend auf einer ersten Seite (101) des Auflageelements (10) bewegbar derart angeordnet ist, dass ein Dampfaustrittsraum zwischen Auflageelement (10) und Dampfdurchlasselement (11) mit einer variierbaren Höhe (h) ausbildbar ist,
**dadurch gekennzeichnet, dass**
das Dampfdurchlasselement (11) mindestens eine Dampfdurchlasselementöffnung (110) aufweist und ein Lager (13, 13')
als Drehlager (13') ausgestaltet und eine definierte Steigung aufweisend vorgesehen ist,
sodass eine
kombinierte Schwenkbewegung mit linearer Verschiebung des Dampfdurchlasselementes (11) relativ zum Auflageelement (10) ausführbar ist.

2. Bratspritzschutz (1) nach Anspruch 1, wobei die kombinierte relative Schwenkbewegung des Dampfdurchlasselementes (11) zum Auflageelement (10) um eine Drehachse (L) und die Linearbewegung in Richtung der Drehachse (L) durchführbar ist und der Dampfdurchlassraum mit variierbarer Höhe (h) aufgrund der Steigung des Drehlagers (13') ausbildbar ist.

3. Bratspritzschutz nach Anspruch 1, wobei das Auflageelement (10) mit dem Lager (13, 13') lösbar verbunden oder an das Lager (13, 13') angeformt ist.

4. Bratspritzschutz nach Anspruch 1, wobei das Dampfdurchlasselement (11) mit dem Lager (13, 13') lösbar verbunden oder an das Lager (13, 13') angeformt ist.

5. Bratspritzschutz (1) nach einem der vorhergehenden Ansprüche, wobei ein bis fünf Auflageelementöffnungen (100) vorgesehen sind.

6. Bratspritzschutz (1) nach einem der vorhergehenden Ansprüche, wobei die Anzahl der Dampfdurchlasselementöffnungen (110) der Anzahl der Auflageelementöffnungen (100) entspricht.

7. Bratspritzschutz (1) nach einem der vorhergehenden Ansprüche, wobei ein Griff (12) am Auflageelement (10) oder Dampfdurchlasselement (11) befestigt oder angeformt ist, mittels welchem die Beabstandung des Auflageelementes (10) vom Dampfdurchlasselement (11) erleichtert erreicht wird.

8. Bratspritzschutz (1) nach einem der vorhergehenden Ansprüche, wobei das Auflageelement (10) und/oder das Dampfdurchlasselement (11) scheiben- oder plattenförmig ausgestaltet sind.

9. Bratspritzschutz (1) nach einem der vorhergehenden Ansprüche, wobei der Durchmesser des Auflageelementes (10) grösser als der Durchmesser des Dampfdurchlasselementes (11) ist.

## Claims

1. A splash guard (1) for frying,
comprising a support element (10) for removably applying to a pan opening (20), wherein the support element (10) encompasses at least one support element opening (100), through which liquids and steam can completely pass through transversely, wherein
a steam outlet element (11) is arranged so as to at least partially cover the support element (10) and the at least one support element opening (100) on a first side (101) of the support element (10) so as to be movable such that a steam outlet chamber comprising a variable height (h) can be embodied between support element (10) and steam outlet element (11),
**characterized in that**
the steam outlet element (11) encompasses at least one steam outlet element opening (110)
and a bearing (13, 13')
embodied as pivot bearing (13') and encompassing a defined incline,
so that a
combined pivot movement with linear displacement of the steam outlet element (11) can be carried out relative to the support element (10).

2. The splash guard (1) for frying according to claim 1, wherein the combined relative pivot movement of the steam outlet element (11) to the support element (10) can be carried out about an axis of rotation (L) and the linear movement can be carried out in the direction of the axis of rotation (L) and the steam outlet chamber can be embodied with a variable height (h) due to the incline of the pivot bearing (13').

3. The splash guard for frying according to claim 1, wherein the support element (10) is removably connected to the bearing (13, 13') or is molded to the bearing (13, 13').

4. The splash guard for frying according to claim 1, wherein the steam outlet element (11) is removably connected to the bearing (13, 13') or is molded to the bearing (13, 13').

5. The splash guard (1) for frying according to one of the preceding claims, wherein provision is made for one to five support element openings (100).

6. The splash guard (1) for frying according to one of the preceding claims, wherein the number of the steam outlet element openings (110) corresponds to the number of the support element openings (100).

7. The splash guard (1) for frying according to one of the preceding claims, wherein a handle (12) is fastened or molded on the support element (10) or steam outlet element (11), by means of which handle the spacing of the support element (10) from the steam outlet element (11) is facilitated.

8. The splash guard (1) for frying according to one of the preceding claims, wherein the support element (10) and/or the steam outlet element (11) are embodied in a disk-shaped or plate-shaped manner.

9. The splash guard (1) for frying according to one of the preceding claims, wherein the diameter of the support element (10) is greater than the diameter of the steam outlet element (11).

## Revendications

1. Dispositif anti-projection (1) à la cuisson
comprenant un élément à poser (10) pour la pose amovible sur l'ouverture d'une casserole (20), l'élément à poser (10) comportant au moins un orifice (100) dans l'élément à poser, à travers lequel des liquides et des vapeurs peuvent passer en le traversant totalement
un élément (11) de passage de la vapeur, l'élément à poser (10) et l'au moins un orifice (100) dans l'élément à poser étant placés de manière mobile, en se recouvrant au moins en partie sur un premier côté (101) de l'élément à poser (10) de sorte à pouvoir créer avec une hauteur (h) variable un espace de sortie de la vapeur entre l'élément à poser (10) et l'élément (11) de passage de vapeur,
**caractérisé en ce que**
l'élément (11) de passage de la vapeur comporte au moins un orifice (110) dans l'élément de passage de la vapeur
et **en ce qu'**il est prévu un coussinet (13, 13') conçu en tant que coussinet pivotant (13') et présentant une inclinaison définie,
de telle sorte à permettre
un pivotement combiné avec déplacement linéaire de l'élément (11) de passage de la vapeur par rapport à l'élément à poser (10).

2. Dispositif anti-projection (1) à la cuisson selon la revendication 1, le pivotement relatif combiné de l'élément (11) de passage de la vapeur par rapport à l'élément à poser (10) étant réalisable autour d'un axe de rotation (L) et le déplacement linéaire étant réalisable en direction de l'axe de rotation (L) et l'espace de sortie de la vapeur étant réalisable avec une hauteur (h) variable, du fait de l'inclinaison du coussinet pivotant (13').

3. Dispositif anti-projection à la cuisson selon la revendication 1, l'élément à poser (10) étant relié de manière amovible avec le coussinet (13, 13') ou étant rapporté sur le coussinet (13, 13').

4. Dispositif anti-projection à la cuisson selon la revendication 1, l'élément (11) de passage de la vapeur étant relié de manière amovible avec le coussinet (13, 13') ou étant rapporté sur le coussinet (13, 13').

5. Dispositif anti-projection (1) à la cuisson selon l'une quelconque des revendications précédentes, de un à cinq orifices (100) dans l'élément à poser étant prévus.

6. Dispositif anti-projection (1) à la cuisson selon l'une quelconque des revendications précédentes, le nombre des orifices (110) dans l'élément de passage de la vapeur correspondant au nombre d'orifices (100) dans l'élément à poser.

7. Dispositif anti-projection (1) à la cuisson selon l'une quelconque des revendications précédentes, une poignée (12) au moyen de laquelle l'écart entre l'élément à poser (10) et l'élément (11) de passage de la vapeur est atteint de manière simplifiée est fixée ou rapportée sur l'élément à poser (10).

8. Dispositif anti-projection (1) à la cuisson selon l'une quelconque des revendications précédentes, l'élément à poser (10) et/ou l'élément (11) de passage de la vapeur étant conçus en forme de disque ou de plaque.

9. Dispositif anti-projection (1) à la cuisson selon l'une quelconque des revendications précédentes, le diamètre de l'élément à poser (10) étant supérieur au diamètre de l'élément (11) de passage de la vapeur.
